(19) **Europäisches Patentamt European Patent Office Office européen des brevets**

(11) **EP 3 391 264 B1**

(12) **EUROPEAN PATENT SPECIFICATION**

(45) Date of publication and mention of the grant of the patent:
**12.02.2020 Bulletin 2020/07**

(51) Int Cl.:
**G06F 21/14** (2013.01)     **H04L 9/00** (2006.01)
**G06F 7/00** (2006.01)

(21) Application number: **16809691.5**

(22) Date of filing: **05.12.2016**

(86) International application number:
**PCT/EP2016/079694**

(87) International publication number:
**WO 2017/102392 (22.06.2017 Gazette 2017/25)**

(54) **CALCULATING DEVICE AND METHOD**

BERECHNUNGSVORRICHTUNG UND VERFAHREN

DISPOSITIF ET PROCÉDÉ DE CALCUL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.12.2015 NL 2015955**

(43) Date of publication of application:
**24.10.2018 Bulletin 2018/43**

(73) Proprietor: **Koninklijke Philips N.V.
5656 AE Eindhoven (NL)**

(72) Inventors:
• **SCHEPERS, Hendrik Jan Jozef Hubertus
5656 AE Eindhoven (NL)**
• **GORISSEN, Mathias Hubertus Mechtildis Antonius
5656 AE Eindhoven (NL)**
• **MARIN, Leandro
5656 AE Eindhoven (NL)**

(74) Representative: **de Haan, Poul Erik
Philips International B.V.
Philips Intellectual Property & Standards
High Tech Campus 5
5656 AE Eindhoven (NL)**

(56) References cited:
**US-A1- 2009 046 851**

• **"Advanced Software Protection: Integration, Research and Exploitation Early White-Box Cryptography and Data Obfuscation Report", Aspire - Advanced Software Protection: Integration, Research and Exploitation, 31 October 2014 (2014-10-31), XP055192832, Retrieved from the Internet: URL:https://aspire-fp7.eu/sites/default/fi les/D2.01-ASPIRE-Early-White-Box-Cryptogra phy-and-Data-Obfuscation-Report-v1.01.pdf [retrieved on 2015-06-01]**

**Description**

FIELD OF THE INVENTION

The invention relates to a calculating device, calculation system, a calculating method, a computer program, and a computer readable medium.

BACKGROUND

In computers calculations are performed for various tasks. As computers are finite, these calculations take place in finite rings. A common example of such rings is arithmetic modulo a number, in particular modulo a power of two. However, there are many other rings for various other applications. For example, polynomial rings are used in some cryptographic algorithms.

In some applications, there is a desire to hide information about the execution of the program from an attacker. In the so-called white box attack model, an attacker is assumed to have detailed access to a running computer program. There is a desire to hide as much as possible from the attacker, even in this model. In particular, sensitive applications, such as banking applications, content protection, and the like, that use cryptography to hide information from an attacker may be vulnerable in the white box model. If an attacker were to read, say, a secret key that was used to encrypt information, then the attacker may be able to decrypt said information himself, thus obtaining financials, plain content and the like.

In addition to protecting information, there is also, more generally, the desire to protect the calculation itself from an attacker. If an attacker knows exactly where certain algorithms are performed, he may be able to focus his attacks on the right spot in the program; he may be able to reverse engineer secret algorithms, say, proprietary encryption or decryption algorithms.

Protecting a general calculation flow is hard using current white box technology. For example, the paper 'White-Box Cryptography and an AES Implementation' by Chow, et al., shows how one particular algorithm (AES) may be protected in the white-box model. This technology may not be directly applied to protect general computer programs, that is, not without extensive human analysis of the program. For example, direct translation, say, of the addition or multiplication operations to tables or table networks of the type described in Chow, would still allow an attacker to deduce when an addition or multiplication is performed, simply by observing which table network is accessed.

SUMMARY OF THE INVENTION

It would be advantageous to have a calculation device with improved ring arithmetic.

A calculating device is provided arranged to perform calculations protected in the white-box model on elements of a ring, a ring addition, and a ring multiplication being defined on the ring. The calculating device comprises

- an operand store arranged to store encoded ring elements, an encoded ring element representing an element of the ring in encoded form,
- an operator module comprising multiple operator units, at least one of the operator units being dyadic,

  - a dyadic operator unit being arranged to

    - receive an encoded ring element and a parameter, and
    - perform a fixed calculation on said encoded ring element and the parameter, thus producing a new encoded ring element, and

  - a calculation manager arranged to

    - receive a first encoded ring element and a second encoded ring element,
    - perform a ring multiplication by applying a sequence of the multiple operator units to the first encoded ring element using parameters obtained at least from the second encoded ring element, or
    - perform a ring addition be applying a sequence of the multiple operator units to the first encoded ring element using parameters obtained at least from the second encoded ring element, wherein the sequence for the ring multiplication is the same as the sequence for the ring addition,

wherein a ring multiplication or a ring addition is performed depending on the parameters.

An attacker observing the operator module may obtain information on which operator is performed. As the sequence of operators for a ring addition is the same as the sequence of ring multiplication, the attacker cannot deduce from the sequence of operators whether a multiplication or whether an addition is performed. The attacker is thus forced to attack the underlying parameter calculation which is however much more complicated and harder to analyze.

In an embodiment, the operator units are implemented as tables or as a table network using white box cryptography. In such an implementation, the table accesses are often clearly visible. If an attacker were to know that a particular table stands for addition, and some other for multiplication, he may be able to deduce the computation, even without knowing the precise inputs and outputs. However, if the same sequence of operators may give an addition or a multiplication, the attacker cannot work out the algorithm being performed only from observing table accesses.

In an embodiment, one or more of the operator units is monadic. Monadic tables are smaller, thus reducing the size of the calculating device. In an embodiment, only monadic and dyadic operators are used, not triadic or higher.

The operators for up and down are indicating above as dyadic because they receive both a parameter and an encoded ring element. However, in an embodiment the number of allowed parameter is smaller than that of encoded ring elements.

In an embodiment, the calculating device comprises a combining unit, the combining unit being arranged to select two consecutive operations of the operator units, combine the selected operations into a single new operation unit, and combine the corresponding parameters accordingly. By combining operators, the attacker gains even less knowledge from observing the tables, even if he were to take parameters into account, as the tables correspond to multiple operations. In addition of reducing the number of operators, the number of operators may also be increased by inserting multiple operators for which the combination does not affect the end result.

A further aspect of the invention is a calculation system comprising

- a calculation device according to any one of the preceding claims, and
- a parameter unit, separate from the calculation manager, arranged to compute the parameters obtained at least from the second encoded ring element for performing the ring multiplication and ring addition by the calculation manager. The computation of the parameters and the execution of the operators may be split in a system. This allows the two parts to run in parallel, and also to be protected in parallel.

The calculating device is an electronic device, e.g., a set-top box, a computer, etc, in particular it may be a mobile electronic device, for example, mobile phone.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code stored on a computer readable medium for performing a method according to the invention when said program product is executed on a computer.

In a preferred embodiment, the computer program comprises computer program code adapted to perform all the steps of a method according to the invention when the computer program is run on a computer. Preferably, the computer program is embodied on a computer readable medium.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings,

Figure 1a schematically shows an example of an embodiment of a calculation device 100,
Figure 1b schematically shows an example of an embodiment of a calculation device 101,
Figure 2a schematically shows an example of an embodiment of an encoded ring element,
Figure 2b schematically shows an example of an embodiment of an operator module,
Figure 3 is a flowchart schematically illustrates a method of calculating in a ring,
Figure 4a schematically shows a computer readable medium having a writable part comprising a computer program according to an embodiment,
Figure 4b schematically shows a representation of a processor system according to an embodiment.

DETAILED DESCRIPTION OF PREFERRED EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described above or recited in mutually different dependent claims.

**Figure la** schematically shows an example of an embodiment of a calculation device 100.

Calculating device 100 is arranged to perform calculations on elements of a finite ring R. A ring is a mathematical structure having a finite set of elements for which a ring addition and a ring multiplication is defined. The addition will be denoted as +, the multiplication as ∙ , or by concatenation. The set of elements together with the addition form an Abelian group, for which the identity is denoted as 0. The ring is a monoid under the multiplication, e.g., the multiplication is associative and there is an identity which is denoted as 1. Elements in R that have an inverse under the multiplication are called units. The units of a ring are not to be confused with the units of a device. The latter are operative parts that perform a certain function, the former are elements of a set that have a multiplicative inverse. The system described below is also suitable if all non-zero elements have a multiplicative inverse, e.g., fields.

There are many different rings known in the art. For example, the integers modulo a number $n$, e.g., $\mathbb{Z}_n$, is a ring. For example, $n$ may be an integer such as 5, 17, etc. The elements $x$ in this ring for which gcd($x$, $n$) = 1 are units. The set of square matrices with elements from a ring also form a ring. The set of polynomials modulo a number and a polynomial, $\mathbb{Z}_n[x]/f(x)$, also form a ring, or more general given a ring R, we have $R[x]/f(x)$ as a new ring.

Calculations in various rings are important in many branches of computer sciences. In computers, it is in particular calculation in finite rings that is important. For many applications it is important that the calculations are hidden from an attacker on that system. For example, for a security application it may be desired that the exact calculations that are performed remain hidden, as for example, a secret key may be derived from knowing which calculations are performed. Hiding this information is particularly hard if an attacker has full access to the computer software code while it is executing. Although different obfuscation techniques are known in the art there remains a desire to further improve obfuscation of calculations in rings.

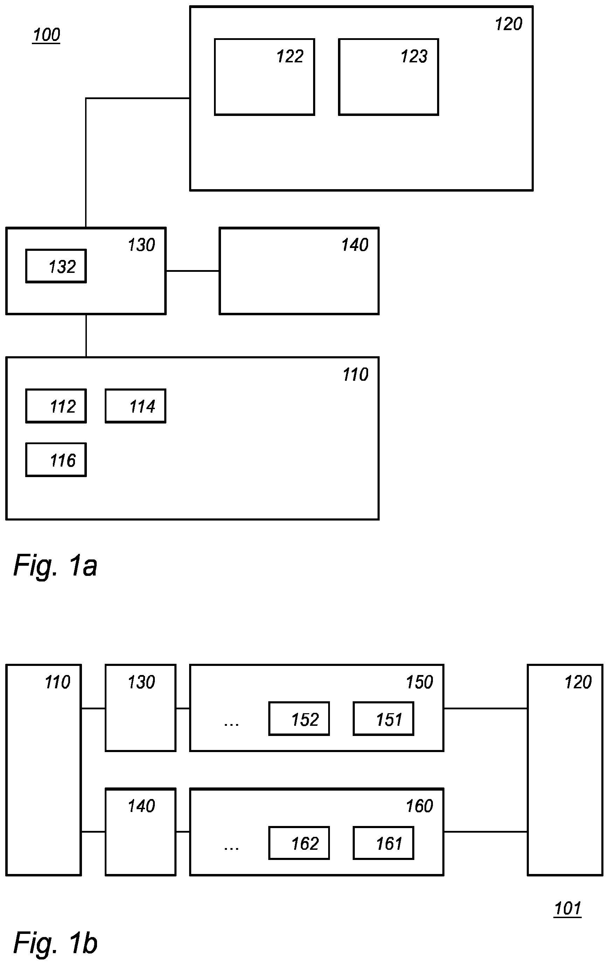

Calculating device 100 comprises an operand store 110 which is arranged to store encoded ring elements. Figure 1a shows encoded ring elements 112, 114, and 116. There are various ways to encode a ring element. An encoded ring element represents an element of the ring in encoded form. Some encodings are discussed below. For an encoding there exists a decoding mapping, e.g., a decryption, which maps an encoded ring element to a plain ring element, e.g., in some conventional notation, e.g., a canonical notation; and an encoding mapping, that maps a plain ring element to an encoded ring element. A given ring element may be encoded in various ways, e.g., the encoded ring elements need not be unique. In such a case, the decoding is a many-to-one mapping. Having multiple different encoding improves security as it makes it harder to construct a table that maps encoded to plain ring elements.

Operand store 110 may comprise constants. For example, constant ring elements that are used in some algorithm, say, in some cryptographic algorithm, such as an encryption, decryption, a MAC operation (message authentication code), signing, signature verification, and the like. Operand store 110 may also comprise ring elements that are input by a user, or are received from a computer, e.g., external to calculation device 100. Calculation device 100 may comprise an encoding unit to translate received plain ring elements to encoded ring elements and/or a decoding unit to translate encoded ring elements to plain ring elements, e.g., before sending them, e.g., to the external computer. Calculation device 100 may also receive external ring elements directly in encoded form. Outside calculation device 100 another encoding, say, encryption may be used, than inside of calculation device 100.

Calculation device 100 comprises an operator module 120. Operator module 120 comprises multiple operator units. At least one of the multiple operator units is a dyadic operator unit. Figure 1a shows one dyadic operator unit 122. Operator module 120 may also contain one or more monadic operator unit. Figure 1a shows one monadic operator unit 123.

A dyadic operator unit such as dyadic operator unit 122 is arranged to

- receive an encoded ring element and a parameter, and
- perform a fixed calculation on said encoded ring element and the parameter, thus producing a new encoded ring element.

A monadic operator unit such as monadic operator unit 123 is arranged to

- receive an encoded ring element, and
- perform a fixed calculation on said encoded ring element, thus producing a new encoded ring element.

In both the dyadic and the monadic case the encoded ring element may be received from operand memory 110, e.g., through a calculation manager 130 (further discussed below). For the dyadic case, the parameter may also be received from operand memory 110, e.g., through a calculation manager 130. The parameter may also be computed, e.g., by calculation manager 130 or by a parameter unit 140 (further discussed below).

The calculation performed by an operator unit is fixed. If an operator is presented with a different parameter or encoded ring element it will execute the same set of computations, albeit with different imputes. For example, the calculation of an operator unit may comprise (or even consist of) ring arithmetic on the parameter or its inverse and elements of the encoded representation. For example, the calculation of an operator unit may comprise (or even consist of) ring multiplications and ring additions. The ring multiplication, including the latter, may be a multiplication with a fixed ring element (e.g., -1).

Calculation device 100 comprises a calculation manager 130. Calculation manager 130 is arranged to receive a first encoded ring element and a second encoded ring element. For example, calculation manager 130 may be arranged to fetch a first encoded ring element and a second encoded ring element from operand memory 110. For example, calculation manager 130 may fetch encoded ring elements 112 and 114.

Calculation device 100 can both perform a ring addition and a ring multiplication on the first encoded ring element and a second encoded ring element. Which operation is chosen, the addition or the multiplication, depends on the application for which calculation device 100 is adapted. For example, a cryptographic operation may be performed that requires a large number of arithmetical to be performed including both multiplications and additions.

Calculation manager 130 is arranged to perform a ring multiplication by applying a sequence of the multiple operator units to the first encoded ring element using parameters obtained at least from the second encoded ring element. For example, each operator unit may be applied to the first encoded ring element in some particular order, some of which may be applied multiple times. For example, the sequence may apply a first operator, then a second operator, then a third operator, then the third operator again, and so on.

Calculation manager 130 is also arranged to perform a ring addition by applying a sequence of the multiple operator units to the first encoded ring element using parameters obtained at least from the second encoded ring element. Interestingly, the sequence that calculation manager 130 may use for the ring multiplication is the same as the sequence for the ring addition. So, to perform the ring addition on the encoded elements, calculation manager may apply the same example sequence given above: the first operator, then the second operator, then the third operator, then the third operator again, and so on.

For example, calculation manager 130 may comprise or have access to a sequence of operators 132. The sequence of operators determines which operators are performed on which encoded ring elements. Sequence 132 may comprise sub-sequences that represent a ring addition and sub-sequences that represent a ring multiplication. The sub-sequences may be equal to each other. Sequence 132 may also include further applications of the multiple operators, or even other, possibly unrelated operators. Sequence 132 may be included in a program. Sequence 132 may be stored in a memory, say, in operand store 110.

An attacker who analyses the operation of operator module 120 will see the same sequence of operations regardless of the fact that an addition or a multiplication is performed. Thus the attacker cannot deduce information about the calculation that is performed from an analysis of the operations. In this way an important aspect of the running of the calculation device is hidden from the attacker.

In theory, the attacker may deduce information from the combination of the parameter and the operator. However, an attacker will typically not know how the ring addition and multiplications have been translated in to two equal sequences. Moreover, in an embodiment, obfuscation techniques may be applied to the system. In particular, the multiple operations may be executed as look-up tables. The encoded ring elements may have a random relationship, e.g., through encryption, or a random encoding, with the plain ring elements. Although an attacker may be able to see which tables are applied and which order to execute the various operator units, he cannot deduce information therefrom since the sequence for a ring addition and ring multiplication has become meaningless. At the same time the parameter has become less useful as well since the tables operate on encoded information.

Monadic operations are particularly suitable for implementation as a look-up table since the size of a table increases strongly with the number of inputs (1, 2, or even more). For example, calculating device 100 may comprise a storage that stores a look-up table implementing the box operator unit (see below).

In addition to ring multiplication and ring addition, the calculation device 100 may be arranged for other operations on ring elements. For example, calculation device may comprise a storage comprising a table that represents an operation that cannot be (easily) represented as a sequence of addition and multiplications.

In addition to ring addition and ring multiplication other operations may also be expressed using the same sequence of the same operators. For example, in an embodiment, calculation manager 130 is arranged to perform a ring subtraction by applying a sequence of the multiple operator units to the first encoded ring element using parameters obtained at least from the second encoded ring element, wherein the sequence for the ring subtraction is the same as the sequence for the ring addition and the sequence for the ring multiplication. For example, negation operations may also be expressed in this way.

Device 100 may during operation be used, e.g., as follows. Calculation device 130 fetches a first and a second encoded ring element from operand storage 110. Calculation device 130 selects operator units from operator module 120; for example according to sequence 132 and causes the selected operator unit to be applied to the first encoded ring elements. Intermediate results of the application may be stored in operator store 150, e.g., as encoded intermediate ring elements. Calculation device 130 may compute the required parameters, or may obtain them from another source, say, parameter unit 140.

Parameter unit 140 is optional. For example, parameters may be obtained, e.g., calculated by calculation manager 130. However, a parameter unit 140 separate from manager 130 and operator module 120 has the advantage that operator selection and parameter calculation is independent and can thus also be protected separately. Protection may use hardware security measures, but may in particular also be software protection such as obfuscation. Obfuscation is more effective if the operand selection of calculation manager 130 is independent from the parameter calculation. If calculation manager 130 is independent from parameter unit 140, and they are also obfuscated separately, it will be harder for an attacker to correlate information gleaned from the two subsystems with each other. Particular effective software protection includes the application of white box cryptography.

In an embodiment, a calculation system comprises

- a calculation device such as calculation device 100, which may not have a parameter unit 140, and a
- a parameter unit 140

Parameter unit 140 may thus be separate from the calculation manager, arranged to compute the parameters obtained at least from the second encoded ring element for performing the ring multiplication and ring addition by the calculation manager. For example, calculation device 100 and parameter unit 140 may be implemented as distinct and different circuits. Such a calculation system may be geographically distributed in which calculation device 100 and parameter units 140 are also geographically separated from each other. For example, the geographic separation may be more than some desired distance, more than say 10 km, etc.

**Figure 1b** schematically shows an example of an embodiment of a calculation device 101. Calculation device 101 is the same as device 100 except as indicated below. In device 101, calculation manager 130 is arranged to select operator units, e.g., in the form of operator references. Calculation manager 130 thus produces a stream of operator references 150. Stream of operator references 150 shows operator references 152 and 151. For example, an operator may be referred to by a pointer, an identifier etc. Calculation manager 130 may also include the operand, e.g., the first encoded ring element in stream 150 on which the operator is to act. Also encoded ring elements may be referred to by pointers to operand store 110, etc, but may also be copied from operand store 110, etc. Independent from calculation manager 130, parameter unit 140 produces a stream of parameters 160. Shown are parameters 161 and 162. Parameter unit 140 and calculation manager 130 may contain a different program to produce operator references and parameters respectively. Although the parameter unit 140 and calculation manager 130 cooperate to produce operator references and parameters that cooperate to perform the correct ring arithmetic, they are nevertheless independent and may be protected independently, e.g., by hardware protection, software protection or some combination thereof. Some of the parameters in stream 160 may be empty, or contain, e.g., a dummy value, in case the corresponding operator unit is monadic. Alternatively, stream 160 may only contain parameters that are actually used by a parameter unit, but (say) operator module 120 is configured to only obtain a parameter from stream 160 in case a parameter is required. Said use of dummy values in stream 160 obfuscates the working of calculating device 160, since an attacker cannot tell from stream 160 when the monadic operator is used.

Streams 150 and 160 may be implemented, e.g., using an appropriate structure, say, a stack, a queue etc, say stored in a storage, such as a memory.

Calculation device 100, 101 may be embodied in a virtual machine. In this case, sequence 132 may be part of the program that runs on the virtual machine.

Conventional virtual machines (VMs) provide basic operations amongst which the addition, subtraction, multiplication, mutual exclusion and so on. The objective of this is twofold: the virtual machine provides operations and primitives which are, as such, not provided by the underlying platform, and enables a compact instruction format which is particularly useful in memory constrained environments.

However, many of the instructions of the VM still are the basic ones like addition, subtraction, multiplication, et cetera, which are directly mapped onto instructions of the underlying platform. Since these are generally well understood a VM can be quite easily attacked through the analysis of the power consumption and the injection of faults. What is more, because of this mapping it is quite easy to add tracing instructions to individual operations.

A virtual machine according to an embodiment alleviates this situation. The virtual machine has instructions for the up, down and box operation, e.g., as part of the instruction set of the VM. The instructions may only be available in a special operation mode, e.g., a security mode.

The relationship between sequences of these operations and the actual functions being performed is less direct. In practice, code to perform the arithmetic could look like:

1. (optionally) changing the mode (for instance, by assigning some address), followed by
2. a sequence of up, down and box instructions implementing the arithmetic and
3. (optionally) ending with a mode change again.

Given the number of algebraic rings and the variations in the possible representations every virtual machine could have its own arithmetic.

The virtual machine may differentiate between the executions of the up, down, and box instructions and the computation of the index (the parameter). For example, these activities may be split.

For example, one activity may be the (pre-)fetch of the sequence of operations, the other activity may be the actual looking up of the outcome of instructions. The pipeline of these activities may in fact be the actual execution model.

The up, down and box operations may be implemented using tables, which also facilitates encoded implementation. The use of a table driven approach is even possible in memory constrained environments, since with the right choice of the underlying ring R the newly defined arithmetic needs only small tables.

The consecutive up and down instructions may be combined, for example, $\Delta_r\Delta_s= \Delta_{rs}$, $\nabla_r\nabla_s= \nabla_{sr}$, $\Delta_r= \nabla_r\text{-1}$, etc. Any two consecutive up or down instructions can be rewritten as a single up or down instruction using these rules. An embodiment of the calculating device or of the virtual machine comprises a combining unit. The combining unit combines two consecutive up, down, or box operations, for example, taken from the stream 150 and combines them into a single new operations, according to one of the above rules. Combining unit 150 then combines the corresponding parameters accordingly. This type of combining has the advantage that parameters do not correspond with a single operation anymore but with a combined operation. A combining unit may also be a stand-alone device, e.g., to obfuscate a given sequence 132. The combining unit 132 may be integrated with a compiler which generates the sequence of operators.

An advantageous calculating device is arranged to perform calculations on elements of a ring (R), a ring addition and a ring multiplication being defined on the ring, the calculating device comprising an operand store 110 arranged to store encoded ring elements, an operator module 120 comprising multiple operator units, and a combining unit, the combining unit being arranged to select two consecutive operations of the operator units, combine the selected operations into a single new operation unit, and combine the corresponding parameters accordingly.

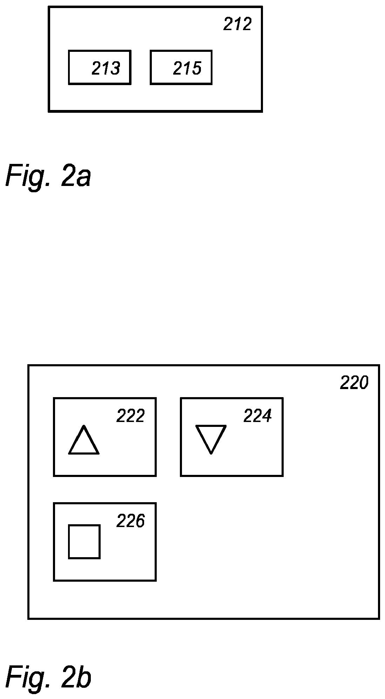

**Figure 2a** schematically shows an example of an embodiment of an encoded ring element 212. Encoded ring element 212, is encoded as a list of multiple ring elements 213 and 215. Thus in this way of encoding the same ring is used to represent its member in an encoded fashion. In mathematical notation, the ring element $x$ may be encoded as the list $(a, b)$ of ring elements.

For example, in an embodiment, the encoded ring element is the difference between said two unit ring elements $(x = a - b)$. A representation as a pair $(a, b)$ may be further restricted, for example, it turns out that it is particularly convenient if at least one of the elements in the list that represents an encoded ring element are units of the ring. The latter implies that calculations can be performed on the elements of the ring element more easily. The difference representation has the further advantage that knowledge of one of the ring elements encoding a ring element gives no or little information on the ring that is encoded. In an embodiment, both elements of the list are units of the ring. Note that additional constraints imposed on the representation may be reflected in table operations. For example, the box operator may be represented as a table; if difference representations are used, the output of the box operator may be restricted in the same manner, e.g., having at least one unit, having at least two units etc.

For example, to encode an element r as a difference, one may choose a random unit $x$ of R, after which r may be represented, e.g., as $r = (r + x) - x$, or $r = x - (x - r)$, or as the tuples $((r + x, x)$ or $(x, (x - r))$. Many rings allow the more restricted representation in which r is written as the difference between two units. This has the advantage that tables for the operators are smaller. Encoding for the more restricted representation may be done may enumerating all differences between units and sorting the list.

In an embodiment, at least some of the parameters are computed without using all of the multiple ring elements in an encoded representation. For example, in an embodiment, at least one parameter is computed using at most a single value from each of the first and second encoded ring elements.

More in general, there is advantage to require the elements in the list are selected from a subset of the ring, or more in particular from a subset of the units of the ring. This restrict the number of different representations of a given ring element as an encoded ring elements. This in turn restricts the size of operator units if they are implemented as tables. Below one particular system will be described in more in detail which encodes ring elements as the difference between two units.

The ring elements in this list encoded ring representation need not be plain ring elements, but may themselves be encoded to further obfuscate the system.

In an embodiment, the two ring elements in a list encoding are represented as exponents $((\alpha, \beta))$. The two ring elements being the exponent of a common base element ($u$) of the ring raised to the power indicated by the exponent ($x = u^\alpha - u^\beta$). This means that the encoded ring element $(\alpha, \beta)$ corresponds to the plain ring element $x = u^\alpha - u^\beta$. This type of encoding may be referred to a log-form. To avoid confusion we may write $(\alpha, \beta)_u$, if we want to make it explicit that log-form is used. Also in this case the exponents may be restricted to a set, and/or encoded.

**Figure 2b** schematically shows an example of an embodiment of an operator module 220. This embodiment comprises three operator units: two dyadic operator units 222 and 224 and one monadic operator unit 226. Embodiments may use more or fewer operator units. Below we will assume that a ring element $x$ encoded as a list ($a, b$) of two ring elements such that $x = a - b$. We will assume $a$ and $b$ have been chosen to be units of the ring R (that is $a$ and $b$ have a multiplicative inverse in R). In an embodiment, the ring R has at least 4, or at least 8 elements, etc.

Although the representation may be complicated and/or encoded we will not include this below, so as to avoid confusing the discussion.

We will refer to the operator units 222, 224, and 226 in operator module 120 as: a (dyadic) up operator unit 222, also notated as $\Delta$; a (dyadic) down operator unit 224, also notated as $\nabla$; and a monadic box operator unit 226, also notated as $\square$. The names up, down and box have been chosen for convenience, but do not carry meaning in themselves. The operators 222, 224, 226 may equally be referred to as a first operator unit, second operator unit and third operator unit. The parameter in a down and up operator may be indicated as a subscript.

Dyadic up operator unit 222, $\Delta$ is arranged to

- receive a representation for a first ring element ($a$) and a second ring element ($b$), the encoded ring element ($x$) being the difference between the first ring element and the second ring element ($x = a - b$), and to receive a parameter ring element ($c$), and
- calculate the first ring element ring multiplied with the inverse of the parameter ($ac^{-1}$) and calculate the second ring element ring multiplied with the inverse of the parameter ($bc^{-1}$), the new encoded ring element ($y$) being represented by the results of said two calculations ($y = ac^{-1} - bc^{-1}$).

Mathematically, the up operator is defined by $\Delta_c((a, b)) = (ac^{-1}, bc^{-1})$. In this formula, $c$ is the parameter, and ($a, b$) is the first encoded ring element. The encoded ring element ($a, b$) encodes the ring element $x = a - b$. The output of the up operator is itself also in encoded form, thus, encoding the element $ac^{-1} - bc^{-1}$.

Dyadic down operator unit 224, $\nabla$ is arranged to

- receive a representation for a first ring element ($a$) and a second ring element ($b$), the encoded ring element ($x$) being the difference between the first ring element and the second ring element ($x = a - b$), and to receive a parameter ring element ($c$), and
- calculate the first ring element ring multiplied with the parameter ($ac$) and calculate the second ring element ring multiplied with the parameter ($bc$), the new encoded ring element ($y$) being represented by the results of said two calculations ($y = ac - bc$).

Mathematically, the down operator is defined by $\nabla_c((a, b)) = (ac, bc)$, in this formula, $c$ is the parameter, and ($a, b$) is the first encoded ring element. The encoded ring element ($a, b$) encodes the ring element $x = a - b$. The output of the up operator is itself also in encoded form, thus, encoding the element $ac - bc$.

Note that the parameter $c$ for both the up and down operator is taken from the range of the ring $R$. The number of allowed parameter is thus much smaller than the number of allowed inputs for the up down operator. The number of allowed inputs may be equal to the number of units times the number of elements of R. For example, the number of allowed parameters may be less than half the number of allowed inputs.

Box operator unit 226, $\square$ is arranged to

- receive a representation for a first ring element ($a$) and a second ring element (b), the encoded ring element ($x$) being the difference between the first ring element and the second ring element ($x = a - b$),
- obtain the negation of the encoded ring element ($x$) plus a fixed increment ($-(x + 1) = -x - 1$) in encoded form.

Mathematically, the box operator 226 is defined by $\square((a, b)) = (k, l)$, in which $k - l = -(x + 1) = -x - 1$. Note that there may be multiple choices for ($k, l$). The box operator may always pick the same choice, which may be a random choice, or a choice within some restriction on the encoded representation. Below we will assume that ($k, l$) are both units of R. The box operator may be expressed as the map (*a, b)* to (*b, a* + 1), using the ring addition. This monadic operation is suited for expression as a table. In a ring in which not all non-zero elements are units, a table can select a representation that satisfies any unit requirement (e.g., the first elements is unit, the second element is unit, or both elements are units). Moreover, a table need not follow any particular formula expressed as an elementary expression (involving only ring addition, subtraction, multiplication and multiplicative inverses) for all inputs; in particular, does not need to follow the expression given above.

All of the operators 222, 224 and 226 may be implemented as a table. For the box operator this is a natural choice. The up and down operators 222 and 224 could also be implemented using ring arithmetic, e.g., the same ring arithmetic that is obfuscated by the calculation device.

Given a first encoded ring element and a second encoded ring element represented as (*a, b*) and (*c, d*) respectively, below a sequence is given to ring add and ring multiply them. The elements of the first encoded ring element and a second encoded ring element may be referred to as the first first ring element (a), first second ring element (b), the second first ring element (c), and the second second ring element (d).

The ring addition may be represented as follows:

$$(a, b) + (c, d) = (\nabla_d \circ \square \circ \Delta_d \circ \nabla_c \circ \square \circ \Delta_c)((a, b))$$

In this formula function composition is indicated with ∘. For example,

- first the up operator unit 222 is applied to the first encoded ring element (*a, b*) using parameter c, then
- the box operator 226 is applied to the result of the previous operator, then
- the down operator unit 224 is applied to the result of the previous operator using parameter c, then
- the up operator unit 222 is applied to the result of the previous operator using parameter *d*, then
- the box operator 226 is applied to the result of previous operator, then
- the down operator unit 224 is applied to the result of the previous operator using parameter *d*.

The sequence of operator references may be, e.g., 224, 226, 224, 222, 226, 222 (in this case the first operator is to the left). The sequence of parameters may be, e.g., *c, -, c, d, -, d,* in which no parameter is indicated with a hyphen.

The ring multiplication may be represented as follows:

$$(a, b) \cdot (c, d) = (\nabla_{ad} \circ \square \circ \Delta_{ad} \circ \nabla_{bd} \circ \square \circ \Delta_{cbd})((a, b))$$

For example,

- first the up operator unit 222 is applied to the first encoded ring element (*a, b*) using parameter *cbd,* then
- the box operator 226 is applied to the result of the previous operator, then
- the down operator unit 224 is applied to the result of the previous operator using parameter *bd*, then
- the up operator unit 222 is applied to the result of the previous operator using parameter *ad,* then
- the box operator 226 is applied to the result of previous operator, then
- the down operator unit 224 is applied to the result of the previous operator using parameter *ad.*

The sequence of operator references may be, e.g., 224, 226, 224, 222, 226, 222 (in this case the first operator is to the left). The sequence of parameters may be, e.g., *cbd, -, bd, ad, -, ad,* in which no parameter is indicated with a hyphen.

The ring subtraction may be represented as follows:

$$(a, b) - (c, d) = (\nabla_c \circ \square \circ \Delta_c \circ \nabla_d \circ \square \circ \Delta_d)((a, b))$$

For example,

- first the up operator unit 222 is applied to the first encoded ring element (*a, b*) using parameter *d*, then
- the box operator 226 is applied to the result of the previous operator, then
- the down operator unit 224 is applied to the result of the previous operator using parameter *d*, then
- the up operator unit 222 is applied to the result of the previous operator using parameter *c*, then
- the box operator 226 is applied to the result of previous operator, then

- the down operator unit 224 is applied to the result of the previous operator using parameter c.

The sequence of operator references may be, e.g., 224, 226, 224, 222, 226, 222 (in this case the first operator is to the left). The sequence of parameters may be, e.g., *d, -, d, c, -, c,* in which no parameter is indicated with a hyphen.

Other sequences that have the property that they can both calculate an addition and a multiplication may be devised. For example, by substituting a new operator unit which is the combination of the box and up operator (□ ○ Δ) in the above formula's, new sequences are obtained. Many other possibilities exist.

In these formulas, the results of operator units as intermediate results may be in the form of an encoded ring element. Note that these formulas produce ring element encoded as the difference of ring units in case the inputs where ring units. That the above formulas are correct may be verified by substituting the corresponding definitions of the operator units and following the mathematical derivation.

Different encoding for the ring elements may give different formulas for the operators. For example, the above description for the up, down, and box operator may be adapted to similar formulas if the encoding is in log form. Another variant is to represent an element as *x* which has log form $(\alpha, \beta)_u$ as the list of ring elements $[\beta, \delta]$ wherein $\delta = \alpha - \beta$, that is $x = u^{\beta+\delta} - u^\beta$. Also in this form, the operators may be expressed. For example, the up operator would become $\Delta_\gamma([\beta, \delta]) = [\beta - \gamma, \delta]$. The down operator would be the same, except with $+ \gamma$ instead of $- \gamma$. The box operation may be defined using the same relation as before.

Other sequence of operators exist that may also be used to create a sequence of operators so that the sequence for the ring multiplication is the same as the sequence for the ring addition. For example, in an embodiment, 2, 3, or more operators are defined operating on the elements of a list representation of an element of R. Some of the operators, say 1 or more, or 2 or more, or all but one, are pre-defined sequence of ring-operations operating on the elements of the list representation of two elements of R. The pre-defined sequence of ring-operations may be expressed as an expression involving the ring multiplication and ring-multiplicative-inverse operations, and optionally also involving ring-addition and ring-subtracting. Some of the operators, say exactly 1, 1 or more, etc, are monadic and represent a fixed operation on the ring element, for example, a fixed expression involving ring addition and the additive-inverse (the minus, '-', operation); this operation may be expressed as a table operation. Although that is not necessary. In an encoded embodiment, the elements of the list representation may be encoded. The ring operations, addition, multiplications, multiplicative and additive inverses etc, may be then be implemented as encoded tables, or table networks. The list representation may be defined as a sequence of elements of ring R, and a surjective map from the list representation to R. For example, the difference representation (a,b) mapping to (a-b), is one such list representation, other examples are given herein.

Below a further sequence of operators is given that may also be used to create a sequence of operators so that the sequence for the ring multiplication is the same as the sequence for the ring addition.

For example, let R by a ring and let *a, b, c, d* $\in$ R. Two elements *x* and *y* are represented as the pairs (*a, b*) and (*c, d*) using the interpretation *x = a - b; y = c - d.* We assume that at least *b* is a unit; this may be achieved by using a difference representation in which each element is a unit; this would imply that also a, c and d are units. Note the following derivation

$$x + y = (a - b) + (c - d)$$
$$= a + c - b - d$$
$$= (ab^{-1} + cb^{-1} - 1)b - d$$
$$= (e - f)b - d$$
$$= eb - fb - d$$
$$= -1(fb + d - eb)$$
$$= -1(fbb^{-1}e^{-1} + db^{-1}e - 1)eb$$
$$= -1(g - h)eb$$
$$= (h - g)eb$$
$$= (heb - geb)$$

The latter may be written again a pair (heb, geb). In this example, we define the box operator □(a, b) = a + b - 1 = e - f. Wherein e is a unit. For the calculation $(a, b) + (c, d)$, first we compute $(x_1, x_2) = \nabla_b \square \Delta_b ((a, c))$. From this the result of (a,b)+(c,d) is computed as $-\nabla_{eb} \square \Delta_{eb}((x_2, d))$. Note that $x_1$ is not used. The multiplication may be performed using the same operators, using the identity $(a, b) \cdot (c, d) = (ac, ad) + (bd, bc)$.

In an embodiment, elements of the ring R may be encoded using different encodings. In the following example, two different representations of ring elements are mixed. Let $x = [\alpha, \Delta_0]_u = u^{\alpha+\Delta_0} - u^\alpha$, and $y = (\sigma, \tau)_u = u^\sigma - u^\tau$. We define the box operator (in this example notated as $\boxplus$) as $\boxplus (\alpha, \Delta_0) = [\beta, \Delta_1]_u$, wherein $u^{\Delta_0} + u^\alpha - 1 = u^\beta - u^{\beta+\Delta_1}$. In the table below, the derivation is shown on the left, and operators are shown in on the right.

| $x + y = (u^{\alpha+\Delta_0} - u^\alpha) + (u^\sigma - u^\tau)$ | $[\alpha, \Delta_0]_u + (\sigma, \tau)_u$ |
|---|---|
| $= u^{\alpha+\Delta_0} - u^\alpha + u^\sigma - u^\tau$ | |
| $= u^\alpha(u^{\Delta_0} + u^{\sigma-\alpha} - 1) - u^\tau$ | $\Delta_\alpha(\sigma,\tau)_u = (\sigma - \alpha, \tau - \alpha)_u$ |
| $= u^\alpha(u^\beta - u^{\beta+\Delta_1}) - u^\tau$ | $\boxplus (\sigma - \alpha, \Delta_0) = [\beta, \Delta_1]u$ |
| $= u^{\alpha+\beta} - u^{\alpha+\beta+\Delta_1} - u^\tau$ | |
| $= -1(u^{\alpha+\beta+\Delta_1} + u^\tau - u^{\alpha+\beta})$ | $\Delta_\beta \circ \Delta_\alpha(\sigma,\tau)_u = (\sigma-\alpha-\beta, \tau-\alpha-\beta)_u$ |
| $= -1 \cdot u^{\alpha+\beta}(u^{\Delta_1} + u^{\tau-\alpha-\beta} - 1)$ | $\boxplus (\tau - \alpha - \beta, \Delta_1) = [\gamma, \Delta_2]_u$ |
| $= -1 \cdot u^{\alpha+\beta}(u^\gamma - u^{\gamma+\Delta_2})$ | |
| $= -1(u^{\alpha+\beta+\gamma} - u^{\alpha+\beta+\gamma+\Delta_2})$ | |
| $= u^{\alpha+\beta+\gamma+\Delta_2} - u^{\alpha+\beta+\gamma}$ | |
| $= [\alpha + \beta + \gamma, \Delta_2]_u$ | $\nabla_\alpha \circ \nabla_\beta \circ \boxplus (\tau - \alpha - \beta, \Delta_1)$ |

Typically, the device 100 comprises a microprocessor which executes appropriate software stored at the device 100; for example, that software may have been downloaded and/or stored in a corresponding memory, e.g., a volatile memory such as RAM or a non-volatile memory such as Flash (not separately shown). Alternatively, the device 100 may, in whole or in part, be implemented in programmable logic, e.g., as field-programmable gate array (FPGA). Device 100 may be implemented, in whole or in part, as a so-called application-specific integrated circuit (ASIC), i.e. an integrated circuit (IC) customized for their particular use. For example, the circuits may be implemented in CMOS, e.g., using a hardware description language such as Verilog, VHDL etc.

In an embodiment, device 100 comprises an operator store circuit, an operator module circuit comprising multiple operator circuits, a calculation manager circuit, and a parameter circuit. The circuits implement the corresponding units described herein. The circuits may be a processor circuit and storage circuit, the processor circuit executing instructions represented electronically in the storage circuits. The circuits may also be, FPGA, ASIC or the like. The operand storage may be a memory circuit, and may be shared with storing program code. Part of the operand storage may be non-volatile storage, e.g., to store constants, part of operand storage may be volatile storage, e.g., to store inputs, intermediate results, output results and the like. Operand storage 110 may include one or more registers.

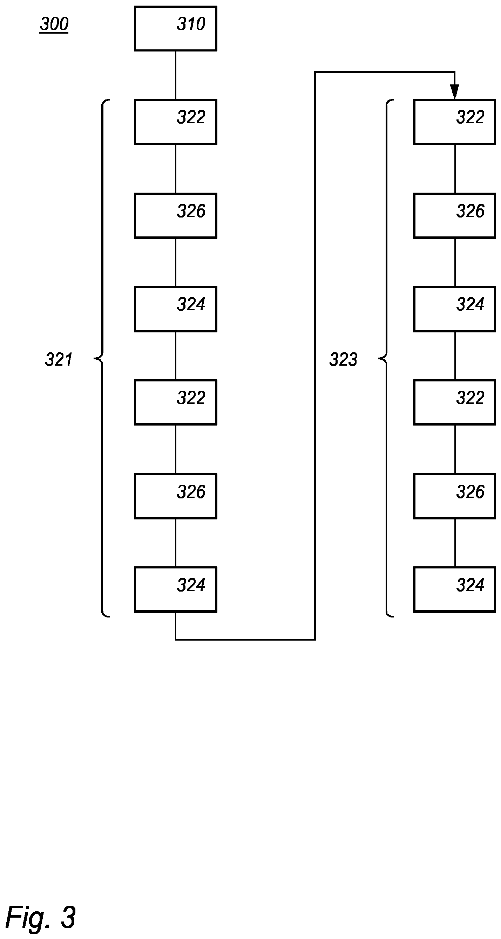

**Figure 3** schematically illustrates a calculating method 300 according to an embodiment with a flow chart. Calculation method 300 is arranged to perform calculations on elements of a ring (R), a ring addition and a ring multiplication being defined on the ring. Calculating method 300 comprises

- storing 310 encoded ring elements, an encoded ring element representing an element of the ring in encoded form.

Furthermore method 300 comprises multiple operations; shown in figure 3 are operations 322, 324 and 326. In this embodiment, operation 322 may represent the up operator 222, operation 324 may represent the down operator 224 and operation 326 may represent the box operator. Note that at least one of the operations is dyadic.

Method 300 comprises performing a ring multiplication 321 by applying a sequence of the multiple operations to the first encoded ring element using parameters obtained at least from the second encoded ring element, and

- performing a ring addition 323 by applying a sequence of the multiple operations to the first encoded ring element using parameters obtained at least from the second encoded ring element, wherein the sequence for the ring multiplication is the same as the sequence for the ring addition.

Method 300 may comprise computing parameters for use in the operations.

Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, the operations may be executed, at least partially, in parallel. Moreover, a given step may not have finished completely before a next step is started. Indeed the operators may be pipelined.

A method according to the invention may be executed using software, which comprises instructions for causing a processor system to perform method 300. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. A method according to the invention may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

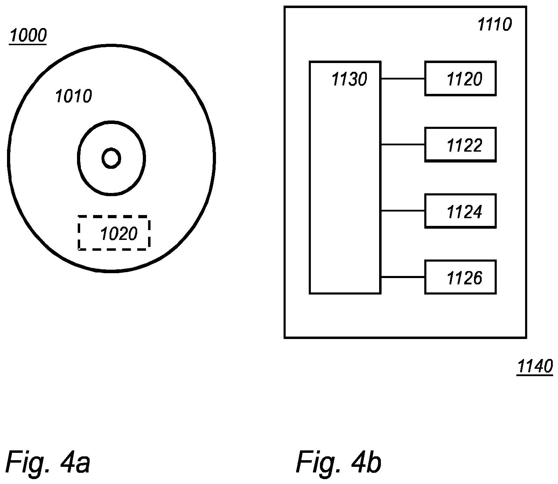

**Figure 4a** shows a computer readable medium 1000 having a writable part 1010 comprising a computer program 1020, the computer program 1020 comprising instructions for causing a processor system to perform a method of calculating in a ring, according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method of calculating in a ring.

**Figure 4b** shows in a schematic representation of a processor system 1140 according to an embodiment. The processor system comprises one or more integrated circuits 1110. The architecture of the one or more integrated circuits 1110 is schematically shown in Figure 4b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say, a bus. The processor system 1110 may be arranged for contact and/or contact-less communication, using an antenna and/or connectors, respectively.

It should be noted that the above-mentioned embodiments illustrate rather than limit the invention, and that those skilled in the art will be able to design many alternative embodiments.

Advantageous embodiments for calculating are set out in the following clauses. The Applicants hereby give notice that new claims may be formulated to such clauses and/or combinations of such clauses and/or features taken from the description, during prosecution of the present application or of any further application derived therefrom.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of embodiments or to formulas of embodiments, thus increasing the intelligibility of the claim. These references shall not be construed as limiting the claim.

List of Reference Numerals in figures 1a-2b:

| | |
|---|---|
| 100, 101 | a calculating device |
| 110 | an operand store |
| 112, 114, 116 | an encoded ring element |
| 120 | an operator module |
| 122 | a dyadic operator unit |
| 123 | a monadic operator unit |
| 130 | a calculation manager |
| 132 | a sequence |
| 140 | a parameter unit |
| 150 | a stream of operator references |
| 151, 152 | an operator reference |
| 160 | a stream of parameters |
| 161, 162 | a parameter |
| 212 | an encoded ring element |
| 213, 215 | a ring element |
| 220 | an operator module |
| 222, $\triangle$ | a dyadic up operator unit |
| 224, $\nabla$ | a dyadic down operator unit |
| 226, $\square$ | a monadic box operator unit |

**Claims**

1. A calculating device (100) arranged to perform protected in the white-box model calculations on elements of a ring (R), a ring addition and a ring multiplication being defined on the ring, the calculating device comprising

    - an operand store (110) arranged to store encoded ring elements (112, 114, 116; 212), an encoded ring element representing an element of the ring in encoded form,
    - an operator module (120; 220) comprising multiple operator units, at least one of the operator units being dyadic,
    - a dyadic operator unit (122; 222, 224) being arranged to
    - receive an encoded ring element and a parameter, and
    - perform a fixed calculation on said encoded ring element and the parameter, thus producing a new encoded ring element, and
    - a calculation manager (130) arranged to

        - receive a first encoded ring element and a second encoded ring element,

- perform a ring multiplication by applying a sequence of the multiple operator units to the first encoded ring element using parameters obtained at least from the second encoded ring element, or
- perform a ring addition by applying a sequence of the multiple operator units to the first encoded ring element using parameters obtained at least from the second encoded ring element, wherein the sequence for the ring multiplication is the same as the sequence for the ring addition,

wherein a ring multiplication or a ring addition is performed depending on the parameters.

2. A calculating device as in Claim 1, wherein at least one of the operator units is monadic

- a monadic operator unit being arranged to
- receive an encoded ring element, and
- perform a fixed calculation on said encoded ring element, thus producing a new encoded ring element.

3. A calculating device as in any one of the preceding claims, in which an encoded ring element (212) ($x$) is encoded as a list of multiple ring elements (213, 215; ($a, b$)) of the ring.

4. A calculating device as in Claim 3, wherein the list comprises two ring elements (213, 215), the encoded ring element being the difference between said two unit ring elements ($x = a - b$).

5. A calculating device as in Claim 4, wherein said two ring elements are represented as exponents (($\alpha, \beta$)), the two ring elements being the exponent of a common base element ($u$) of the ring raised to the power indicated by the exponent ($x = u^\alpha - u^\beta$).

6. A calculating device as in any one of the preceding claims, wherein the calculation manager is arranged to perform a ring subtraction by applying a sequence of the multiple operator units to the first encoded ring element using parameters obtained at least from the second encoded ring element, wherein the sequence for the ring subtraction is the same as the sequence for the ring addition and the sequence for the ring multiplication.

7. A calculating device as in any one of the preceding claims, wherein

- the multiple operator units comprise a dyadic up operator unit ($\Delta$, 222), the up operator unit being arranged to

- receive a representation for a first ring element ($a$) and a second ring element ($b$), the encoded ring element ($x$) being the difference between the first ring element and the second ring element ($x = a - b$), and to receive a parameter ring element ($c$), and
- calculate the first ring element ring multiplied with the inverse of the parameter ($ac^{-1}$) and calculate the second ring element ring multiplied with the inverse of the parameter ($bc^{-1}$), the new encoded ring element ($y$) being represented by the results of said two calculations ($y = ac^{-1} - bc^{-1}$), and/or

- the multiple operator units comprise a dyadic down operator unit ($\nabla$, 224), the down operator unit being arranged to

- receive a representation for a first ring element ($a$) and a second ring element ($b$), the encoded ring element ($x$) being the difference between the first ring element and the second ring element ($x = a - b$), and to receive a parameter ring element ($c$), and
- calculate the first ring element ring multiplied with the parameter ($ac$) and calculate the second ring element ring multiplied with the parameter ($bc$), the new encoded ring element ($y$) being represented by the results of said two calculations ($y = ac - bc$).

8. A calculating device as in any one of the preceding claims, wherein the multiple operator units comprise a monadic box operator unit ($\square$, 226), the box operator unit being arranged to

- receive a representation for a first ring element ($a$) and a second ring element ($b$), the encoded ring element ($x$) being the difference between the first ring element and the second ring element ($x = a - b$),
- obtain the negation of the encoded ring element ($x$) plus a fixed increment ($-(x + 1) = -x - 1$) in encoded form.

9. A calculating device as in any one of the preceding claims, comprising a storage storing a look-up table implementing the box operator unit.

10. A calculating device as in any one of claims 7-9, wherein the calculation manager is arranged to

    - receive a representation for a first first ring element ($a$) and a first second ring element ($b$), the first encoded ring element ($x$) being the difference ($x = a - b$) between the first first ring element (a) and the first second ring element (b),

    - receive a representation for a second first ring element ($c$) and a second second ring element ($d$), the second encoded ring element ($x$) being the difference ($y = c - d$) between the second first ring element (c) and the second second ring element (d), wherein

        - the sequence for the ring addition is given by
        - the up operator unit with parameter the second first ring element ($c$),
        - the box operator unit
        - the down operator unit with parameter the second first ring element ($c$),
        - the up operator unit with parameter the second second ring element ($d$),
        - the box operator unit
        - the down operator unit with parameter the second second ring element ($d$), and/or

    - the sequence for the ring multiplication is given by

        - the up operator unit with parameter the ring multiplication ($cbd$) of the second first ring element ($c$), the first second ring element ($b$), and the second second ring element ($d$)
        - the box operator unit
        - the down operator unit with parameter the ring multiplication ($bd$) of the first second ring element ($b$) and the second second ring element ($d$),
        - the up operator unit with parameter the ring multiplication ($ad$) of the first first ring element ($a$) and the second second ring element ($d$),
        - the box operator unit
        - the down operator unit with parameter the ring multiplication ($ad$) of the first first ring element ($a$) and the second second ring element ($d$),

11. A calculating device as in any one of the preceding claims comprising a combining unit, the combining unit being arranged to select two consecutive operations of the operator units, combine the selected operations into a single new operation unit, and combine the corresponding parameters accordingly.

12. A calculation system comprising

    - a calculation device according to any one of the preceding claims, and
    - a parameter unit (140), separate from the calculation manager, arranged to compute the parameters obtained at least from the second encoded ring element for performing the ring multiplication and ring addition by the calculation manager.

13. A calculation system as in Claim 12, comprising a first circuit arranged as the calculation device and a second circuit arranged as the parameter unit, the first and second circuit being distinct and different circuits.

14. A calculating method using a calculating device arranged to perform calculations protected in the white-box model on elements of a ring (R), a ring addition and a ring multiplication being defined on the ring, the calculating method comprising

    - storing encoded ring elements, an encoded ring element representing an element of the ring in encoded form,
    - multiple operations, at least one of the operations being dyadic,
    - a dyadic operation comprising
    - receiving an encoded ring element and a parameter, and
    - performing a fixed calculation on said encoded ring element and the parameter, thus producing a new encoded ring element,

the calculating method further comprising

- receiving a first encoded ring element and a second encoded ring element,
- performing a ring multiplication by applying a sequence of the multiple operations to the first encoded ring element using parameters obtained at least from the second encoded ring element, or
- performing a ring addition be applying a sequence of the multiple operations to the first encoded ring element using parameters obtained at least from the second encoded ring element, wherein the sequence for the ring multiplication is the same as the sequence for the ring addition,

wherein a ring multiplication or a ring addition is performed depending on the parameters.

**15.** A computer program (1020) comprising computer program instructions arranged to perform the method of claim 14 when the computer program is run on a computer.

**16.** A computer readable medium (1000) comprising the computer program (1020) as in claim 15.

**Patentansprüche**

**1.** Berechnungsvorrichtung (100), welche eingerichtet ist, in dem White-Box-Modell geschützte Berechnungen für Elemente eines Rings (R) durchzuführen, wobei eine Ringaddition und eine Ringmultiplikation für den Ring definiert sind, wobei die Berechnungsvorrichtung umfasst

- einen Operandenspeicher (110), welcher eingerichtet ist, codierte Ringelemente (112, 114, 116; 212) zu speichern, wobei ein codiertes Ringelement ein Element des Rings in codierter Form darstellt,
- ein Operatormodul (120; 220), welches mehrere Operatoreinheiten umfasst, wobei zumindest eine von den Operatoreinheiten dyadisch ist,
- wobei eine dyadische Operatoreinheit (122; 222, 224) eingerichtet ist, um
- ein codiertes Ringelement und einen Parameter zu empfangen, und
- eine feste Berechnung für das codierte Ringelement und den Parameter durchzuführen und somit ein neues codiertes Ringelement zu erzeugen, und
- einen Berechnungsmanager (130), welcher eingerichtet ist, um
- ein erstes codiertes Ringelement und ein zweites codiertes Ringelement zu empfangen,
- eine Ringmultiplikation durch Anwenden einer Abfolge der mehreren Operatoreinheiten auf das erste codierte Ringelement unter Verwendung von Parametern durchzuführen, welche zumindest von dem zweiten codierten Ringelement erhalten wurden, oder
- eine Ringaddition durch Anwenden einer Abfolge der mehreren Operatoreinheiten auf das erste codierte Ringelement unter Verwendung von Parametern durchzuführen, welche zumindest von dem zweiten Ringelement erhalten wurden, wobei die Abfolge für die Ringmultiplikation dieselbe ist wie die Abfolge für die Ringaddition,

wobei eine Ringmultiplikation oder eine Ringaddition abhängig von den Parametern durchgeführt wird.

**2.** Berechnungsvorrichtung nach Anspruch 1, wobei zumindest eine der Operatoreinheiten monadisch ist,

- wobei eine monadische Operatoreinheit eingerichtet ist, um
- ein codiertes Ringelement zu empfangen, und
- eine feste Berechnung für das codierte Ringelement durchzuführen, somit ein neues codiertes Ringelement zu erzeugen.

**3.** Berechnungsvorrichtung nach einem der vorstehenden Ansprüche, in welcher ein codiertes Ringelement (212) ($x$) als eine Liste von mehreren Ringelementen (213, 215; ($a$, $b$)) des Rings codiert ist.

**4.** Berechnungsvorrichtung nach Anspruch 3, wobei die Liste zwei Ringelemente (213, 215) umfasst, wobei das codierte Ringelement die Differenz zwischen den zwei Einheitenringelementen ($x = a - b$) ist.

**5.** Berechnungsvorrichtung nach Anspruch 4, wobei die zwei Ringelemente als Exponenten (($\alpha$, $\beta$)) dargestellt sind, wobei die zwei Ringelemente der Exponent eines gemeinsamen Basiselements ($u$) des Rings sind, welches zu der durch den Exponenten ($x = u^{\alpha} - u^{\beta}$) angezeigten Potenz erhöht ist.

**6.** Berechnungsvorrichtung nach einem der vorstehenden Ansprüche, wobei der Berechnungsmanager eingerichtet ist, eine Ringsubtraktion durch Anwenden einer Abfolge der mehreren Operatoreinheiten auf das erste codierte Ringelement unter Verwendung von Parametern durchzuführen, welche zumindest von dem zweiten Ringelement erhalten wurden, wobei die Abfolge für die Ringsubtraktion dieselbe ist wie die Abfolge für die Ringaddition und die Abfolge für die Ringmultiplikation.

**7.** Berechnungsvorrichtung nach einem der vorstehenden Ansprüche, wobei

- die mehreren Operatoreinheiten eine dyadische Aufwärtsoperatoreinheit ($\Delta$, 222) umfassen, wobei die Aufwärtsoperatoreinheit eingerichtet ist, um
- eine Darstellung für ein erstes Ringelement ($a$) und ein zweites Ringelement ($b$) zu empfangen, wobei das codierte Ringelement ($x$) die Differenz zwischen dem ersten Ringelement und den zweiten Ringelement ($x = a - b$) ist ist, und ein Parameterringelement ($c$) zu empfangen, und
- das erste Ringelement multipliziert mit dem invertierten Parameter ($ac^{-1}$) zu berechnen und das zweite Ringelement multipliziert mit dem invertierten Parameter ($bc^{-1}$) zu berechnen, wobei das neue codierte Ringelement ($y$) durch die Ergebnisse der zwei Berechnungen ($y = ac^{-1} - bc^{-1}$) dargestellt wird, und/oder
- die mehreren Operatoreinheiten eine dyadische Abwärtsoperatoreinheit ($\nabla$, 224) umfasst, wobei die Abwärtsoperatoreinheit eingerichtet ist, um
- eine Darstellung für ein erstes Ringelement ($a$) und ein zweites Ringelement ($b$) zu empfangen, wobei das codierte Ringelement ($x$) die Differenz zwischen dem ersten Ringelement und den zweiten Ringelement ($x = a - b$) ist, und ein Parameterringelement ($c$) zu empfangen, und
- das erste Ringelement multipliziert mit dem Parameter ($ac$) zu berechnen und das zweite Ringelement multipliziert mit dem Parameter ($bc$) zu berechnen, wobei das neue codierte Ringelement ($y$) durch die Ergebnisse der zwei Berechnungen ($y = ac - bc$) dargestellt wird.

**8.** Berechnungsvorrichtung nach einem der vorstehenden Ansprüche, wobei die mehreren Operatoreinheiten eine monadische Boxoperatoreinheit ($\square$, 226) umfassen, wobei die Boxoperatoreinheit eingerichtet ist, um

- eine Darstellung für ein erstes Ringelement ($a$) und ein zweites Ringelement ($b$) zu empfangen, wobei das codierte Ringelement ($x$) die Differenz zwischen dem ersten Ringelement und dem zweiten Ringelement ist ($x = a - b$) ist,
- die Negation des codierten Ringelements ($x$) plus einer festen Erhöhung ($-(x + 1) = -x - 1$) in codierter Form zu erhalten.

**9.** Berechnungsvorrichtung nach einem der vorstehenden Ansprüche, umfassend einen Speicher, welcher eine Nachschlagetabelle umfasst, welche die Boxoperatoreinheit implementiert.

**10.** Berechnungsvorrichtung nach einem der Ansprüche 7-9, wobei der Berechnungsmanager eingerichtet ist, um

- eine Darstellung für ein erstes erstes Ringelement ($a$) und ein erstes zweites Ringelement ($b$) zu empfangen, wobei das erste codierte Ringelement ($x$) die Differenz ($x = a - b$) zwischen dem ersten ersten Ringelement ($a$) und dem ersten zweiten Ringelement ($b$) ist,
- eine Darstellung für ein zweites erstes Ringelement ($c$) und ein zweites zweites Ringelement ($d$) zu empfangen, wobei das zweite codierte Ringelement ($x$) die Differenz ($y = c - d$) zwischen dem zweiten ersten Ringelement ($c$) und dem zweiten zweiten Ringelement ($d$) ist, wobei
- die Abfolge für die Ringaddition festgelegt ist durch
- die Aufwärtsoperatoreinheit mit Parameter das zweite erste Ringelement ($c$),
- die Boxoperatoreinheit
- die Abwärtsoperatoreinheit mit Parameter das zweite erste Ringelement ($c$),
- die Aufwärtsoperatoreinheit mit Parameter das zweite zweite Ringelement ($d$),
- die Boxoperatoreinheit
- die Abwärtsoperatoreinheit mit Parameter das zweite zweite Ringelement ($d$), und/oder
- die Abfolge für die Ringmultiplikation festgelegt ist durch
- die Aufwärtsoperatoreinheit mit Parameter die Ringmultiplikation ($cbd$) des zweiten ersten Ringelements ($c$), des ersten zweiten Ringelements ($b$) und des zweiten zweiten Ringelements ($d$)
- die Boxoperatoreinheit
- die Abwärtsoperatoreinheit mit Parameter die Ringmultiplikation ($bd$) des ersten zweiten Ringelements ($b$) und des zweiten zweiten Ringelements ($d$),

- die Aufwärtsoperatoreinheit mit Parameter die Ringmultiplikation (*ad*) des ersten ersten Ringelements (*a*), des zweiten zweiten Ringelements (*d*),
- die Boxoperatoreinheit
- die Abwärtsoperatoreinheit mit Parameter die Ringmultiplikation (*ad*) des ersten ersten Ringelements (*a*) und des zweiten zweiten Ringelements (*d*).

11. Berechnungsvorrichtung nach einem der vorstehenden Ansprüche, umfassend eine Kombinationseinheit, wobei die Kombinationseinheit eingerichtet ist, um zwei aufeinanderfolgende Operationen der Operatoreinheiten auszuwählen, die ausgewählten Operationen in eine einzelne neue Operationseinheit zu kombinieren, und die zugehörigen Parameter entsprechend zu kombinieren.

12. Berechnungssystem, umfassend:

    - eine Berechnungsvorrichtung nach einem der vorstehenden Ansprüche, und
    - eine Parametereinheit (140), getrennt von dem Berechnungsmanager, welche eingerichtet ist, um die zumindest von dem zweiten codierten Ringelement erhaltenen Parameter zu berechnen, um die Ringmultiplikation und Ringaddition durch den Berechnungsmanager durchzuführen.

13. Berechnungssystem nach Anspruch 12, umfassend eine erste Schaltung, welche als die Berechnungsvorrichtung eingerichtet ist, und eine zweite Schaltung, welche als die Parametereinheit eingerichtet ist, wobei die erste und zweite Schaltung eindeutige und unterschiedliche Schaltungen sind.

14. Berechnungsverfahren unter Verwendung einer Berechnungsvorrichtung, welches eingerichtet ist, in dem White-Box-Modell geschützte Berechnungen für Elemente eines Rings (R) durchzuführen, wobei eine Ringaddition und eine Ringmultiplikation für den Ring definiert sind, wobei das Berechnungsverfahren umfasst

    - Speichern von codierten Ringelementen, wobei ein codiertes Ringelement ein Element des Rings in codierter Form darstellt,
    - mehrere Operationen, wobei zumindest eine der Operationen dyadisch ist,
    - wobei eine dyadische Operation umfasst
    - Empfangen eines codierten Ringelements und eines Parameters, und
    - Durchführen einer festen Berechnung für das codierte Ringelement und den Parameter und somit Erzeugen eines neuen codierten Ringelements,
    wobei das Berechnungsverfahren weiter umfasst
    - Empfangen eines ersten codierten Ringelements und eines zweiten codierten Ringelements,
    - Durchführen einer Ringmultiplikation durch Anwenden einer Abfolge der mehreren Operationen auf das erste codierte Ringelement unter Verwendung von Parametern, welche zumindest von dem zweiten codierten Ringelement erhalten wurden, oder
    - Durchführen einer Ringaddition durch Anwenden einer Abfolge der mehreren Operationen auf das erste codierte Ringelement unter Verwendung von Parametern, welche zumindest von dem zweiten Ringelement erhalten wurden, wobei die Abfolge für die Ringmultiplikation dieselbe ist wie die Abfolge für die Ringaddition, wobei eine Ringmultiplikation oder eine Ringaddition abhängig von den Parametern durchgeführt wird.

15. Computerprogramm (1020), umfassend Computerprogrammanweisungen, welche eingerichtet sind, das Verfahren nach Anspruch 14 auszuführen, wenn das Computerprogramm auf einem Computer ausgeführt wird.

16. Computerlesbares Medium (1000), umfassend das Computerprogramm (1020) nach Anspruch 15.

## Revendications

1. Dispositif de calcul (100) agencé pour réaliser, protégé dans le modèle de boîte blanche, des calculs sur des éléments d'un anneau (R), une addition d'anneau et une multiplication d'anneau étant définies sur l'anneau, le dispositif de calcul comprenant

    - un magasin d'opérande (110) agencé pour stocker des éléments d'anneau codés (112, 114, 116 ; 212), un élément d'anneau codé représentant un élément de l'anneau sous forme codée,
    - un module d'opérateur (120 ; 220) comprenant de multiples unités d'opérateur, au moins une des unités d'opérateur étant dyadique,
- une unité d'opérateur dyadique (122 ; 222, 224) qui est agencée pour
- recevoir un élément d'anneau codé et un paramètre, et
- effectuer un calcul fixé sur ledit élément d'anneau codé et le paramètre, en produisant ainsi un nouvel élément d'anneau codé, et
- un gestionnaire de calcul (130) agencé pour
- recevoir un premier élément d'anneau codé et un second élément d'anneau codé,
- effectuer une multiplication d'anneau en appliquant une séquence des multiples unités d'opérateur au premier élément d'anneau codé en utilisant des paramètres obtenus au moins à partir du second élément d'anneau codé, ou
- effectuer une addition d'anneau en appliquant une séquence des multiples unités d'opérateur au premier élément d'anneau codé en utilisant des paramètres obtenus au moins à partir du second élément d'anneau codé, dans lequel la séquence pour la multiplication d'anneau est la même que la séquence pour l'adition d'anneau, dans lequel une multiplication d'anneau ou une adition d'anneau est effectuée en fonction des paramètres.

2. Dispositif de calcul selon la revendication 1, dans lequel au moins une des unités d'opérateur est monadique

- une unité d'opérateur monadique étant agencée pour
- recevoir un élément d'anneau codé, et
- effectuer un calcul fixé sur ledit élément d'anneau codé, en produisant ainsi un nouvel élément d'anneau codé.

3. Dispositif de calcul selon l'une quelconque des revendications précédentes, dans lequel un élément d'anneau codé (212) ($x$) est codé comme une liste de multiples éléments d'anneau (213, 215 ; ($a$, $b$)) de l'anneau.

4. Dispositif de calcul selon la revendication 3, dans lequel la liste comprend deux éléments d'anneau (213, 215), l'élément d'anneau codé étant la différence entre lesdits deux éléments d'anneau unitaires ($x = a - b$).

5. Dispositif de calcul selon la revendication 4, dans lequel lesdits deux éléments d'anneau sont représentés comme des exposants (($\alpha$, $\beta$)), les deux éléments d'anneau étant l'exposant d'un élément de base commun ($u$) de l'anneau élevé à la puissance indiquée par l'exposant ($x = u^{\alpha} - u^{\beta}$).

6. Dispositif de calcul selon l'une quelconque des revendications précédentes, dans lequel le gestionnaire de calcul est agencé pour effectuer une soustraction d'anneau en appliquant une séquence des multiples unités d'opérateur au premier élément d'anneau codé en utilisant des paramètres obtenus au moins à partir du second élément d'anneau codé, dans lequel la séquence pour la soustraction d'anneau est la même que la séquence pour l'adition d'anneau et la séquence pour la multiplication d'anneau.

7. Dispositif de calcul selon l'une quelconque des revendications précédentes, dans lequel

- les multiples unités d'opérateur comprennent une unité d'opérateur haut dyadique ($\Delta$, 222), l'unité d'opérateur haut étant agencée pour
- recevoir une représentation pour un premier élément d'anneau ($a$) et un second élément d'anneau ($b$), l'élément d'anneau codé ($x$) étant la différence entre le premier élément d'anneau et le second élément d'anneau ($x = a - b$), et pour recevoir un élément d'anneau de paramètre ($c$), et
- calculer le premier élément d'anneau multiplié par l'inverse du paramètre ($ac^{-1}$) et calculer le second élément d'anneau multiplié par l'inverse du paramètre ($bc^{-1}$), le nouvel élément d'anneau codé ($y$) étant représenté par les résultats desdits deux calculs ($y = ac^{-1} - bc^{-1}$), et/ou
- les multiples unités d'opérateur comprennent une unité d'opérateur bas dyadique ($\nabla$, 224), l'unité d'opérateur bas étant agencée pour
- recevoir une représentation pour un premier élément d'anneau ($a$) et un second élément d'anneau ($b$), l'élément d'anneau codé ($x$) étant la différence entre le premier élément d'anneau et le second élément d'anneau ($x = a - b$), et pour recevoir un élément d'anneau de paramètre ($c$), et
- calculer le premier élément d'anneau multiplié par le paramètre ($ac$) et calculer le second élément d'anneau multiplié par le paramètre ($bc$), le nouvel élément d'anneau codé ($y$) étant représenté par les résultats desdits deux calculs ($y = ac - bc$).

8. Dispositif de calcul selon l'une quelconque des revendications précédentes, dans lequel les multiples unités d'opérateur comprennent une unité d'opérateur case monadique ($\square$, 226), l'unité d'opérateur case étant agencée pour recevoir une représentation pour un premier élément d'anneau (*a*) et un second élément d'anneau (*b*), l'élément d'anneau codé (*x*) étant la différence entre le premier élément d'anneau et le second élément d'anneau (*x* = *a* - *b*),

- obtenir la négation de l'élément d'anneau codé (*x*) plus un incrément fixe *(-(x + 1) = -x - 1)* sous forme codée.

**9.** Dispositif de calcul selon l'une quelconque des revendications précédentes, comprenant un dispositif de stockage stockant une table de consultation mettant en œuvre l'unité d'opérateur case.

**10.** Dispositif de calcul selon l'une quelconque des revendications 7 à 9, dans lequel le gestionnaire de calcul est agencé pour

- recevoir une représentation pour un premier premier élément d'anneau (*a*) et un premier second élément d'anneau (*b*), le premier élément d'anneau codé (*x*) étant la différence (*x* = *a* - *b*) entre le premier premier élément d'anneau (*a*) et le premier second élément d'anneau (*b*),
- recevoir une représentation pour un second premier élément d'anneau (*c*) et un second second élément d'anneau (*d*), le second élément d'anneau codé (*x*) étant la différence (*y* = *c* - *d*) entre le second premier élément d'anneau (*c*) et le second second élément d'anneau (*d*), dans lequel
- la séquence pour l'adition d'anneau est donnée par
- l'unité d'opérateur haut avec paramètre le second premier élément d'anneau (*c*),
- l'unité d'opérateur case
- l'unité d'opérateur bas avec paramètre le second premier élément d'anneau (*c*),
- l'unité d'opérateur haut avec paramètre le second second élément d'anneau (*d*),
- l'unité d'opérateur case
- l'unité d'opérateur bas avec paramètre le second second élément d'anneau (*d*), et/ou
- la séquence pour la multiplication d'anneau est donnée par
- l'unité d'opérateur haut avec paramètre la multiplication d'anneau (*cbd*) du second premier élément d'anneau (*c*), du premier second élément d'anneau (*b*) et du second second élément d'anneau (*d*)
- l'unité d'opérateur case
- l'unité d'opérateur bas avec paramètre la multiplication d'anneau (*bd*) du premier second élément d'anneau (*b*) et du second second élément d'anneau (*d*),
- l'unité d'opérateur haut avec paramètre la multiplication d'anneau (*ad*) du premier premier élément d'anneau (*a*) et du second second élément d'anneau (*d*),
- l'unité d'opérateur case
- l'unité d'opérateur bas avec paramètre la multiplication d'anneau (*ad*) du premier premier élément d'anneau (*a*) et du second second élément d'anneau (*d*).

**11.** Dispositif de calcul selon l'une quelconque des revendications précédentes, comprenant une unité de combinaison, l'unité de combinaison étant agencée pour sélectionner deux opérations consécutives des unités d'opérateur, combiner les opérations sélectionnées en une unique nouvelle unité d'opération, et combiner les paramètres correspondant en conséquence.

**12.** Système de calcul comprenant

- un dispositif de calcul selon l'une quelconque des revendications précédentes, et
- une unité de paramètres (140), séparée du gestionnaire de calcul, agencée pour calculer les paramètres obtenus au moins à partir du second élément d'anneau codé pour effectuer la multiplication d'anneau et l'adition d'anneau par le gestionnaire de calcul.

**13.** Système de calcul selon la revendication 12, comprenant un premier circuit agencé comme le dispositif de calcul et un second circuit agencé comme l'unité de paramètres, le premier et le second circuit étant des circuits distincts et différents.

**14.** Procédé de calcul utilisant un dispositif de calcul agencé pour effectuer des calculs protégés dans le modèle de boîte blanche sur des éléments d'un anneau (R), une addition d'anneau et une multiplication d'anneau étant définies sur l'anneau, le procédé de calcul comprenant

- le stockage d'éléments d'anneau codés, un élément d'anneau codé représentant un élément de l'anneau sous forme codée,
- de multiples opérations, au moins une des opérations étant dyadique,
- une opération dyadique comprenant
- la réception d'un élément d'anneau codé et d'un paramètre, et
- l'exécution d'un calcul fixé sur ledit élément d'anneau codé et le paramètre, en produisant ainsi un nouvel élément d'anneau codé,
le procédé de calcul comprenant en outre
- la réception d'un premier élément d'anneau codé et un second élément d'anneau codé,
- l'exécution d'une multiplication d'anneau en appliquant une séquence des multiples opérations au premier élément d'anneau codé en utilisant des paramètres obtenus au moins à partir du second élément d'anneau codé, ou
- l'exécution d'une addition d'anneau en appliquant une séquence des multiples opérations au premier élément d'anneau codé en utilisant des paramètres obtenus au moins à partir du second élément d'anneau codé, dans lequel la séquence pour la multiplication d'anneau est la même que la séquence pour l'adition d'anneau, dans lequel une multiplication d'anneau ou une adition d'anneau est effectuée en fonction des paramètres.

15. Programme informatique (1020) comprenant des instructions de programme informatique agencées pour réaliser le procédé selon la revendication 14 quand le programme informatique est exécuté sur un ordinateur.

16. Support lisible par ordinateur (1000) comprenant le programme informatique (1020) selon la revendication 15.

100

120

122    123

130
132    140

110

112    114

116

**Fig. 1a**

110    130    150

...    152    151    120

140    160

...    162    161

101

**Fig. 1b**

Fig. 2a

Fig. 2b

_Fig. 3_

_1000_

1010

1020

1110

1130   1120

1122

1124

1126

_1140_

# Fig. 4a

# Fig. 4b